# EUROPEAN PATENT SPECIFICATION

(11) **EP 1 999 198 B1**
(45) Date of publication and mention of the grant of the patent: **03.02.2016**
(21) Application number: 07711926.1
(22) Date of filing: 13.03.2007
(51) Int. Cl.: C08J 7/12, B29C 49/24, B29C 49/04, B29L 31/00, B29L 9/00, B29C 49/48

(54) **METHOD OF MANUFACTURING HOLLOW BODY MADE OF PLASTIC HAVING A BARRIER LAYER ON ITS INNER SURFACE**
KUNSTSTOFFHOHLKÖRPER MIT SPERRSCHICHT AN DER INNENSEITE UND VERFAHREN ZUR HERSTELLUNG DES KUNSTSTOFFHOHLKÖRPERS
MÉTHODE DE FABRICATION D'UN ARTICLE CREUX EN PLASTIQUE COMPORTANT UNE COUCHE BARRIÈRE SUR SA SURFACE INTERNE

(30) Priority: 17.03.2006 DE 102006012367
(43) Date of publication of application: 10.12.2008
(73) Proprietor: L'AIR LIQUIDE, Société Anonyme pour l'Etude et l'Exploitation des Procédés Georges Claude, 75007 Paris (FR); Air Liquide Deutschland GmbH, 40235 Düsseldorf (DE)
(72) Inventor: VAN BONN, Rolf, 47269 Duisburg (DE); BARBE, Joachim, 47918 Tönisvorst (DE)
(74) Representative: Mellul-Bendelac, Sylvie Lisette
(86) International application number: PCT/EP2007/002182
(87) International publication number: WO 2007/107262

(56) References cited:
- EP-A1- 0 568 135
- JP-A- 63 319 119
- US-A- 3 647 613
- US-A- 3 862 284
- US-A- 4 861 250
- US-A- 5 244 615

## Description

The invention relates to a method for the production of a hollow body made of plastic, the inner surface of which has a coating with a locally selective barrier effect.

The use of plastics for the production of containers for industrial gases and liquids is limited, inter alia, by the permeation of gases, vapours, and solvents through the container wall. One possibility of reducing the permeation through the container wall made of plastic is the coating of the inner surface of the container with a permeation-inhibiting barrier layer.

Various methods are used for the formation of permeation-inhibiting barrier layers made of plastics, such as, for example, fluorination, coating, coextrusion and the treatment of the surface with barrier layer resins.

In fluorination, the polymer surface is subjected to attack by elemental fluorine. For hollow bodies made of plastic, gas-phase fluorination in which a fluorine-containing treatment gas acts briefly on the inner surface of the hollow body has proved particularly useful. In the simplest case, for example in the case of a hollow body made of polyethylene, a stepwise free radical substitution of the CH bonds by CF bonds occurs.

The fluorination of the surfaces of the plastics not only influences the permeation behaviour to a high degree, but the abrasion resistance, the chemical, thermal and mechanical stability, the adhesion behaviour and the wettability are also influenced.

DE 35 11 743 A1 describes a method for the manufacture of a hollow body having a fluorinated inner surface, in which a parison comprising a thermoplastic is extruded through an annular extruder die and then blown to give a hollow body inside a closed supporting mould using a fluorine-containing treatment gas in such a way that the hollow body fills the inner contours of the supporting mould. A certain duration during which the fluorine-containing treatment gas remains in the hollow body and acts on the inner surface thereof is specified here. After expiry of the specified action time, the hollow body is flushed with an inert gas and the supporting mould is removed. This method is referred to as inline fluorination since the fluorination and the manufacture of the hollow body take place simultaneously.

Furthermore, DE 24 01 948 A1 and DE 26 44 508 A1 teach methods for so-called offline fluorination in which a gas-phase fluorination is carried out on finished shaped or hollow bodies made of plastic.

Depending on the reaction conditions of the fluorination, fluorinated layers having very different structures result. For achieving certain advantageous and uniquely reproducible surface effects, exact compliance with certain structure parameters of a fluorinated surface is of considerable importance for the behaviour of the material. These are primarily layer thickness, uniformity of fluorine occupancy, distribution of CHF, CF₂ and CF₃ groups and the depth profile. Moreover, the different surface reactivity of many plastics, which occasionally varies even from batch to batch, must be taken into account. The maintenance and choice of certain reaction conditions are therefore required for the formation of defined fluorinated layers.

In the gas-phase fluorination according to the prior art, barrier layers whose mean fluorine occupancy is determined by the process parameters are produced, but the local fluorine occupancy may vary in an uncontrolled manner about the mean fluorine occupancy. For example, such variations arise if the fluorine-containing treatment gas flows into the hollow body and zones with low gas turbulence form. Owing to insufficient gas turbulence, the replacement of spent with fresh treatment gas and hence the feed of fluorine are hindered so that the plastic surface is occupied with fluorine to a lesser degree in these areas. By suitable method steps, such as alternate filling of the hollow body with fluorine-containing treatment gas and inert flushing gas, such local variations of the fluorine occupancy can be reduced.

However, such measures give rise to greater complexity and costs.

In addition it is desirable for various industrial applications that those regions of a container which are subjected to a high load have an improved barrier effect. A typical example of this is the runback region of a fuel tank, through which large amounts of fuel flow in normal operation. In order to ensure the required barrier effect in regions subjected to high load, the process parameters, such as fluorine content, duration of action and temperature of the fluorine-containing treatment gas are regulated in the gas-phase fluorination so that the mean fluorine occupancy in the entire fuel tank reaches or exceeds the value required in regions subjected to high load. Those regions of the fuel tank which are subjected to a lower load are provided with a fluorine occupancy which in part considerably exceeds the required degree.

The hollow bodies made of plastic having a fluorinated inner surface which are known in the prior art have the disadvantage that the mean fluorine occupancy has a high value and that the local fluorine occupancy varies in an uncontrolled manner. The associated production processes have the disadvantages of increased use of fluorine and/or longer process duration.

One can also report to the following documents illustrating the prior art of this technical field : EP- 568 135, US-3 647 613 , US-3 862 284, US- 4 861, 250, US-5 244 615, and JP-633 19 119, but as mentioned above, none of those documents teaches conditions allowing a selective fluorination for different zones of the body.

Accordingly, it is the object of the invention to provide a method allowing the production of a hollow body made of plastic which has an inner surface with a locally selective barrier effect.

This objective is achieved by the Method according to Claim 1 here-after.

The further development of the invention is evident from the features of Claims 2 to 8.

The invention is described in more detail below with reference to the figures and on the basis of working examples.
- Fig. 1a: shows a schematic view of a defined region,
- Fig. 1b: schematically shows the fluorine occupancy at the edge of the defined region, and
- Fig. 2: shows a graph with measured values of the working examples 1 to 4.

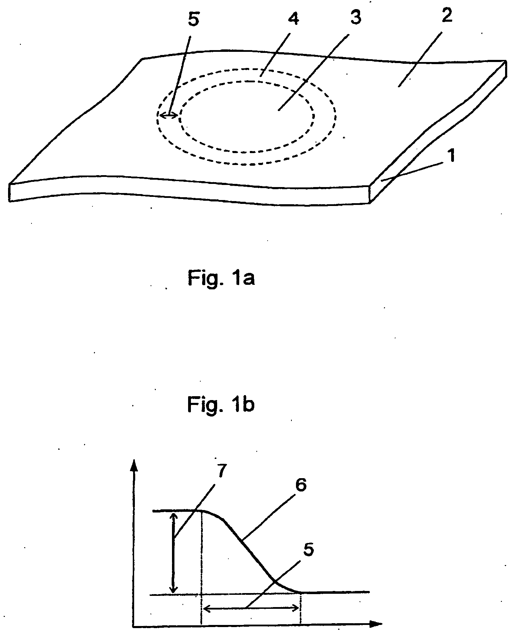

Fig. 1a schematically shows a wall section 1 of a hollow body having a fluorinated inner surface 2 and a defined region 3, the defined region 3 being surrounded by an edge zone 4 of a width 5. The width 5 of the edge zone 4 may vary along the circumference of the defined region 3.

Fig. 1b schematically shows the curve of the fluorine occupancy 6 in the edge zone 4, the numeral 7 designating the decrease/increase in the fluorine occupancy 6 over the width 5 of the edge zone 4.

The hollow body made of plastic, produced according to the invention, has a fluorinated inner surface 2, the fluorine occupancy deviating from the mean fluorine occupancy by at least ± 10% in one or more defined regions 3 of the inner surface 2. In a preferred embodiment of the invention, the fluorine occupancy in the defined regions deviates from the mean value by at least ± 30% in particular by at least ± 50%.

In addition, the defined regions 3 are surrounded by an edge zone 4 in which the fluorine occupancy 6 shows a continuous monotonic increase or decrease. The width 5 of the edge zone is from 1 to 15 mm and may vary along the circumference of the defined region 3. Here and below, the quotient of increase/decrease of the fluorine occupancy 7 and width 5 of the edge zone 4 is designated as edge gradient of the fluorine occupancy. The edge gradient is stated in the unit % cm⁻¹ (per cent increase/decrease of the fluorine occupancy per cm), the stated percentage being based on the mean fluorine occupancy (= 100%).

According to the invention, the defined regions 3 of the inner surface are delimited from their surroundings by an edge zone 4 having a width of 1 to 15 mm, the edge gradient of the fluorine occupancy, based on the mean fluorine occupancy of the inner surface, being greater than or equal to 6% cm⁻¹, in particular greater than or equal to 20% cm⁻¹ and particularly preferably greater than or equal to 33% cm⁻¹.

The mean fluorine occupancy and the wall thickness of the hollow body according to the invention are from 5 to 120 µg/cm² and from 0.5 to 20 mm, respectively.

In a preferred embodiment of the invention, the wall thickness and the fluorine occupancy in the abovementioned regions vary in a correlated manner so that regions having a large wall thickness have a high fluorine occupancy and vice versa, as is evident from the numerical values in examples 1 to 4.

The hollow body preferably consists of a thermoplastic. Thermoplastics are mouldable at their specific softening temperature; they consist of polymers and copolymers of polystyrene, polyacrylonitrile, polyvinyl chloride and polyolefins. Preferably used thermoplastic blends are polyolefin polymers or copolymers of the following monomers: ethylene, propylene, 1-butene, 1-pentene, 4-methyl-1-pentene, 3-methyl-1-butene and 3,3-dimethyl-1-butene. These blends may optionally also contain constituents such as pigments, fillers, dulling agents, plasticizers, flame retardants, anti-static agents and other known materials for influencing the chemical and physical properties of the finished thermoplastic product. These blends may also contain other plastics mixed with a polyolefin.

In particular, the hollow body according to the invention is in the form of a fuel tank.

The methods according to the invention for the production of a hollow body made of plastic, the inner surface of which has a coating having a locally selective barrier effect, are based on gas-phase fluorination in the inline and offline mode. Here, the hollow body is filled with a treatment gas having a fluorine content of 0.1 to 25% by volume once or several times for a certain action time - in the range of a few seconds to one hour. The temperature of the treatment gas is adjusted between -120°C and 35°C, depending on the fluorine content, the action time, wall temperature of the hollow body and the desired mean fluorine occupancy on the inner surface. After the expiry of the reaction time, the hollow body is flushed with an inert gas in order to remove the fluorine-containing treatment gas, and the process is optionally repeated. The reaction of the elemental fluorine present in the treatment gas with the plastic of the inner surface of the hollow body is highly exothermic and can lead to combustion of the plastic when critical process parameters are exceeded. This disadvantageous effect is counteracted by means of cooling of the hollow body and/or of the treatment gas.

In addition to fluorine, the treatment gas substantially contains an inert gas, such as nitrogen, argon, helium and the like. Optionally, additives such as oxygen, carbon monoxide and carbon dioxide or mixtures of these gases are added to the treatment gas for improving the colourability and the barrier effect with respect to oil, and chlorine and bromine and mixtures of these gases are added to said treatment gas for reducing the flammability.

The substitution rate of the chemical reaction which leads to the incorporation of fluorine into the plastic of the inner surface of the hollow body depends substantially on the temperature and the fluorine concentration. The reaction takes place faster and substitution rate increases with increasing temperature and activation, respectively. Conversely, a higher substitution rate results in an increase in the temperature, owing to the exothermic course of the reaction. A precondition for maintaining the reaction is the supply of elemental fluorine. If the temperature falls below a certain value, the chemical reaction takes place very slowly and the substitution rate tends to zero even with a sufficient supply of fluorine.

The method according to the invention for the production of a hollow body made of plastic having a fluorinated inner surface by means of gas-phase fluorination utilize the temperature dependency of the chemical reaction between fluorine and plastic.

According to one of the implementation modes of the invention, the method according to the invention is carried out by blow extrusion with inline fluorination. First, a parison is extruded from a thermoplastic, the gap width of the extrusion die being varied so that one or more defined zones of the parison have predetermined different wall thicknesses. Thereafter, the parison is first blown with a fluid - preferably nitrogen - to give a hollow body within a closed cooled supporting mould so that the hollow body fills the inner contours of the supporting mould, the wall thicknesses being increased/reduced in one or more defined regions of the hollow body and the cooling of the inner surface being effected more slowly/faster. After the shaping and before the end of the cooling process, the hollow body is completely filled with the fluorine-containing gas, fluorine being incorporated in the defined regions of the inner surface to a greater/lesser extent owing to the higher/lower temperatures. The wall thickness of the parison and hence of the hollow body is adjusted in a controlled manner varying the gap width of the extrusion die by means of computer-controlled final control elements during the extrusion of the parison. An extrusion head whose outer die is fixed while the inner mandrel, which has a specially shaped lateral surface, is vertically adjustable is frequently used for this purpose. During the extrusion, the mandrel is moved vertically, with the result that the width of the gap between outer die and inner mandrel changes. Extrusion heads having combined axial and radial gap width adjustment are used for producing complex wall thickness profiles. The supporting mould typically consists of two solid blocks of aluminium, one half of the outer mould of the hollow body to be produced being cut into each of the blocks. In addition, the blocks have a multiplicity of bores through which water having a temperature in the range from 5 to 15°C is passed for cooling.

According to one of the implementation modes of the invention of the blow extrusion with inline fluorination, a parison comprising a thermoplastic is extruded and first blown with a fluid - preferably nitrogen - to give a hollow body within a closed cooled supporting mould so that the hollow body fills the inner contours of the supporting mould, the cooling being reduced in one or more defined zones of the supporting mould and the cooling of those regions of the inner surface of the hollow body which are congruent with these zones taking place more slowly. After the shaping and before the end of the cooling process, the hollow body is completely filled with a fluorine-containing gas, fluorine being incorporated to a greater extent in the congruent regions of the inner surface owing to the higher temperatures of the congruent regions. In order to influence the cooling of the hollow body in a controlled manner, defined zones of the inner contours of the supporting mould are coated with a thermally insulating paint. As a result, in the defined zones, the heat transfer from the hollow body to the supporting mould is reduced and the cooling of the hollow body is slowed down. Alternatively, the cooling is reduced by reducing the amount of cooling water flowing through the supporting mould in the defined zones. For this purpose, the cooling water supply is throttled locally or the number and/or the cross section of the cooling bores in the supporting mould are reduced.

### Examples

The following examples 1 to 4 explain the invention. In particular, the relationship between wall thickness and fluorine occupancy is described. For examples 1 to 4, in each case a plastic fuel tank (PFT) having a fluorinated inner surface was produced by blow extrusion and inline fluorination. The thermoplastic used was black HDPE (Lupolen 4261 A SW 63200 from Basell N.V.) having a density of 1.000 g/cm³. In contrast to the blow extrusion with inline fluorination known in the prior art, the gap width of the extrusion die was varied during the extrusion of the parison so that the shaped PFTs had a plurality of defined regions with predetermined different wall thicknesses in the range from 4.4 to 7.3 mm. The extruded parisons were blown with nitrogen in a water-cooled supporting mould. After the shaping of the PFTs, the inline fluorination was effected with a fluorine-nitrogen gas mixture having fluorine contents between 1 and 2.5% by volume at a pressure of 9.8 bar and in treatment times from 15 to 25 sec.

For determining the fluorine occupancy, test pieces having a fluorinated inner surface of about 0.2 cm² were punched out of the PFTs produced and were chemically analysed using a Fluoride Analyzer Model 9000 F from Antek Instruments, which operates according to the following method: combustion of the sample volume in an oxygen stream at a temperature of 1050°C, organic fluorine compounds being quantitatively converted into hydrogen fluoride; precipitation of the HF gas formed in the combustion in a buffered solution and measurement of the fluoride content of the solution obtained by means of an ion-sensitive electrode.

The wall thickness of the test pieces was determined prior to punching out of the PFT by means of ultrasound.

Gradients in the fluorine occupancy were measured by means of photoelectron spectroscopy (PES/ESCA) and total reflection Fourier transform infrared spectroscopy (ATR-FTIR). For the calibration of the relative measured values from PES/ATR-FTIR, a reference sample with homogeneous fluorine occupancy was measured by PES/ATR-FTIR, and the fluorine occupancy was then quantitatively determined using the Fluoride Analyzer.

**Table 1**

| Example | Wall thickness [mm] | Fluorine occupancy [µg·cm⁻²] | Mean fluorine occupancy [µg·cm⁻²] | Fluorine occupancy/wall thickness* [µg·cm⁻²/mm] |
|---|---|---|---|---|
| | 4.4 | 36 | | |
| | 4.9 | 38 | | |
| 1 | 5.3 | 44 | 48 | 22 |
| | 6.4 | 51 | | |
| | 6.7 | 71 | | |
| | 4.4 | 46 | | |
| 2 | 5.5 | 59 | 68 | 13 |
| | 6.0 | 74 | | |
| | 6.4 | 93 | | |
| 3 | 5.5 | 65 | 78 | 29 |
| | 6.4 | 91 | | |
| | 4.9 | 27 | | |
| 4 | 5.7 | 33 | 36 | 9 |
| | 7.3 | 48 | | |

| | | | | |
|---|---|---|---|---|
| * Increase in the fluorine occupancy per mm wall thickness, according to linear regression of the measured values | | | | |

The results of the measurements for examples 1 to 4 are shown in table 1. For the fluorine occupancy, values in the range from 27 to 91 µg/cm² were determined. The relationship between fluorine occupancy and wall thickness was approximated in each case by straight lines (linear regression). The slopes obtained from the linear regression are likewise shown in table 1 and are in the range from 9 to 29 µg·cm⁻²/mm.

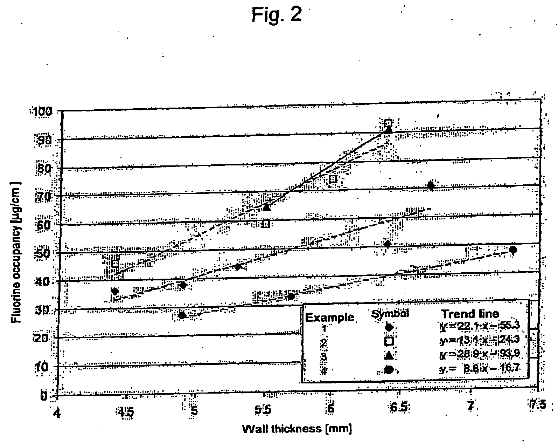

Fig. 2 shows the measured values of examples 1 to 4 in graphic form. In addition to the measured values represented by the symbols, the graph shows trend lines (shown as solid or dashed lines), which were determined on the basis of linear regression.

## Claims

1. Method for the production of a hollow body made of plastic having a fluorinated inner surface, showing a locally selective barrier effect, by the fact that in one or more defined regions of the inner surface, the fluorine occupancy deviates from the mean fluorine occupancy by at least ± 10%, preferably by at least ± 30%, and more preferably by at least ± 50%, comprising the following method steps:
- extrusion of a parison from a thermoplastic,
- blowing of the parison to give a hollow body within a closed cooled supporting mould with a fluid so that the hollow body fills the inner contours of the supporting mould, and
- filling of the hollow body with a fluorine-containing gas during the cooling process,
wherein :
**(i)**
- the gap width of the extrusion die is varied so that one or more defined zones of the parison have predetermined different wall thicknesses;
- whereby during said blowing of the parison the wall thicknesses are increased/reduced in one or more defined regions of the hollow body and so this way the cooling of the inner surface in said defined regions being this way effected more slowly/faster, and fluorine being incorporated in the defined regions of the inner surface to a greater/lesser extent owing to the higher/lower temperatures of the defined regions;
**or**
**(j)**
- the cooling is reduced in one or more defined zones of the supporting mould and the cooling of those regions of the inner surface of the hollow body which are congruent with these zones taking place more slowly, fluorine being therefore incorporated to a greater extent in the congruent regions of the inner surface owing to the higher temperatures of the congruent regions.

2. Method according to Claim 1, **characterized in that** the fluid used for blowing the parison is nitrogen.

3. Method according to any of claims 1 or 2, **characterized in that** the mean fluorine occupancy is 5 to 120 µg/cm².

4. Method according to anyone of the preceding claims **characterized in that** the defined regions of the inner surface are delimited from their surroundings by an edge zone having a width of 1 to 15 mm and **in that** the fluorine occupancy in the edge zone shows a continuous monotonic increase/decrease, the edge gradient of the fluorine occupancy, based on the mean fluorine occupancy of the inner surface, being greater than or equal to 6% cm⁻¹, in particular greater than or equal to 20% cm⁻¹ and particularly preferably greater than or equal to 33% cm⁻¹.

5. Method according to Claim 4, **characterized in that** the wall thickness of the hollow body is 0.5 to 20 mm.

6. Method according to Claim 5, **characterized in that** the wall thickness varies and **in that** the fluorine occupancy is correlated with the wall thickness in such a way that regions having a high density of the fluorine occupancy per unit area have a large wall thickness, and vice versa.

7. Method according to anyone of the preceding claims **characterized in that** the hollow body consists of a thermoplastic.

8. Method according to Claim 7, **characterized in that** in the hollow body is a fuel tank.

## Patentansprüche

1. Verfahren zur Herstellung eines hohlen Körpers aus Kunststoff mit einer fluorierten Innenfläche, der eine lokal selektive Barrierenwirkung durch die Tatsache aufweist, dass in einem oder in mehreren definierten Bereichen der Innenfläche die Fluorbelegung von der mittleren Fluorbelegung um mindestens ± 10 %, vorzugsweise um mindestens ± 30 % und insbesondere um mindestens ± 50 % abweicht, umfassend die folgenden Verfahrensschritte:
- Extrudieren eines Rohlings aus einem Thermoplast,
- Blasen des Rohlings, um einen hohlen Körper in einer geschlossenen gekühlten Stützform mit einem Fluid zu ergeben, so dass der hohle Körper die inneren Umrisse der Stützform ausfüllt, und
- Füllen des hohlen Körpers mit einem fluorhaltigen Gas während des Kühlprozesses,
worin:
(i) - die Breite des Zwischenraums der Extrusionsdüse variiert wird, so dass ein oder mehrere definierte Bereiche des Rohlings vorbestimmte verschiedene Wandstärken aufweisen;
- wobei während des Blasens des Rohlings die Wandstärken in einer oder in mehreren definierten Bereichen des hohlen Körpers erhöht/reduziert werden, und wobei auf diese Weise die Kühlung der Innenfläche in den definierten Bereichen langsamer/schneller erfolgt, und wobei Fluor in die definierten Bereichen der Innenfläche aufgrund der höheren/niedrigeren Temperaturen der definierten Bereiche in einem größeren/geringeren Maß eingebaut werden;
oder
(j) - die Kühlung in einem oder in mehreren definierten Bereichen der Stützform reduziert wird und die Kühlung von denjenigen Bereichen der Innenfläche des hohlen Körpers, die deckungsgleich mit diesen Bereichen sind, langsamer erfolgt, wobei Fluor daher in den deckungsgleichen Bereichen der Innenfläche aufgrund der höheren Temperaturen der deckungsgleichen Bereiche in einem größeren Maß eingebaut wird.

2. Verfahren nach Anspruch 1, **dadurch gekennzeichnet, dass** das Fluid, das zum Blasen des Rohlings verwendet wird, Stickstoff ist.

3. Verfahren nach einem der Ansprüche 1 oder 2, **dadurch gekennzeichnet, dass** die mittlere Fluorbelegung 5 bis 120 µg/cm² beträgt.

4. Verfahren nach einem der vorhergehenden Ansprüche, **dadurch gekennzeichnet, dass** die definierten Bereiche der Innenfläche von ihrer Umgebung durch einen Randbereich mit einer Breite von 1 bis 15 mm abgegrenzt sind, und dadurch, dass die Fluorbelegung im Randbereich eine kontinuierliche monotone Zunahme/Abnahme zeigt, wobei der Randgradient der Fluorbelegung, basierend auf der mittleren Fluorbelegung der Innenfläche, größer als oder gleich 6 % cm⁻¹ ist' besonders größer als oder gleich 20 % cm⁻¹ und insbesondere größer als oder gleich 33 % cm⁻¹.

5. Verfahren nach Anspruch 4, **dadurch gekennzeichnet, dass** die Wandstärke des hohlen Körpers 0,5 bis 20 mm beträgt.

6. Verfahren nach Anspruch 5, **dadurch gekennzeichnet, dass** die Wandstärke variiert, und dadurch, dass die Fluorbelegung mit der Wandstärke derartig korreliert ist, dass die Bereiche mit einer hohen Dichte der Fluorbelegung pro Flächeneinheit eine große Wandstärke aufweisen und umgekehrt.

7. Verfahren nach einem der vorhergehenden Ansprüche, **dadurch gekennzeichnet, dass** der hohle Körper aus einem Thermoplast besteht.

8. Verfahren nach Anspruch 7, **dadurch gekennzeichnet, dass** der hohle Körper ein Kraftstofftank ist.

## Revendications

1. Procédé de fabrication d'un corps creux en plastique ayant une surface interne fluorée, présentant un effet de barrière localement sélectif, dû au fait que dans une ou plusieurs régions définies de la surface interne, l'occupation du fluor s'écarte de l'occupation moyenne du fluor d'au moins ± 10 %, de préférence d'au moins ± 30 % et mieux encore d'au moins ± 50 %, comprenant les étapes opératoires suivantes :
- extrusion d'une ébauche à partir d'une matière thermoplastique,
- soufflage de l'ébauche pour donner un corps creux à l'intérieur d'un moule de support refroidi fermé avec un fluide de sorte que le corps creux remplisse les contours internes du moule de support, et
- remplissage du corps creux avec un gaz contenant du fluor pendant le processus de refroidissement,
dans lequel :
(i) - la largeur d'espace de la filière d'extrusion varie de sorte qu'une ou plusieurs zones définies du l'ébauche aient des épaisseurs de paroi différentes prédéterminées ;
- de ce fait, pendant ledit soufflage de l'ébauche, les épaisseurs de paroi augmentent/diminuent dans une ou plusieurs régions définies du corps creux et ainsi de cette manière le refroidissement de la surface interne dans lesdites régions définies sont ainsi affectées plus lentement/rapidement, et le fluor est incorporé dans les régions définies de la surface interne à un niveau plus/moins important en raison des températures plus/moins élevées des régions définies ;
ou
(j) - le refroidissement est réduit dans une ou plusieurs zones définies du moule de support et le refroidissement de ces régions de la surface interne du corps creux qui sont conformes à ces zones a lieu plus lentement, le fluor étant de ce fait incorporé de façon plus importante dans les régions conformes de la surface interne en raison des températures plus élevées des régions conformes.

2. Procédé selon la revendication 1, **caractérisé en ce que** le fluide utilisé pour le soufflage de l'ébauche est l'azote.

3. Procédé selon l'une quelconque des revendications 1 ou 2, **caractérisé en ce que** l'occupation moyenne du fluor est de 5 à 120 µg/cm².

4. Procédé selon l'une quelconque des revendications précédentes **caractérisé en ce que** les régions définies de la surface interne sont délimitées par rapport à leur entourage par une zone de bord ayant une largeur de 1 à 15 mm et **en ce que** l'occupation du fluor dans la zone de bord présente une augmentation/réduction monotone continue, le gradient de bord de l'occupation du fluor, par rapport à l'occupation moyenne du fluor de la surface interne, étant supérieur ou égal à 6 % cm⁻¹, en particulier supérieur ou égal à 20 % cm⁻¹, et mieux encore supérieur ou égal à 33 % cm⁻¹.

5. Procédé selon la revendication 4, **caractérisé en ce que** l'épaisseur de paroi du corps creux est de 0,5 à 20 mm.

6. Procédé selon la revendication 5, **caractérisé en ce que** l'épaisseur de paroi varie et **en ce que** l'occupation du fluor est corrélée à l'épaisseur de paroi de telle sorte que les régions ayant une forte densité d'occupation de fluor par unité de surface aient une épaisseur de paroi élevée, et inversement.

7. Procédé selon l'une quelconque des revendications précédentes **caractérisé en ce que** le corps creux est constitué d'une matière thermoplastique.

8. Procédé selon la revendication 7, **caractérisé en ce que** le corps creux est un réservoir d'essence.
